# EUROPEAN PATENT APPLICATION

(11) **EP 4 588 955 A1**
(43) Date of publication of application: **23.07.2025**
(21) Application number: 23865416.4
(22) Date of filing: 08.09.2023
(51) Int. Cl.: C08G 73/10, C08J 5/18, C09D 179/08, C09J 179/08, H01L 21/304

(54) **POLYIMIDE RESIN, POLYIMIDE VARNISH, POLYIMIDE FILM, AND TEMPORARY FIXING MATERIAL COMPOSITION**

(30) Priority: 16.09.2022 JP 2022148519
(71) Applicant: MITSUBISHI GAS CHEMICAL COMPANY, INC., Chiyoda-ku Tokyo 100-8324 (JP)
(72) Inventor: ABIKO Yohei, Hiratsuka-shi, Kanagawa 254-0016 (JP); YASUFUKU Haruka, Hiratsuka-shi, Kanagawa 254-0016 (JP); YONEHAMA Shinichi, Hiratsuka-shi, Kanagawa 254-0016 (JP)
(74) Representative: Hoffmann Eitle
(86) International application number: PCT/JP2023/032770
(87) International publication number: WO 2024/058061

(57) **Abstract**

A polyimide resin including a constitutional unit A derived from a tetracarboxylic dianhydride and a constitutional unit B derived from a diamine, the constitutional unit A including a constitutional unit (A1) derived from a compound represented by Formula (a1), and the constitutional unit B including a constitutional unit (B1) derived from a compound represented by Formula (b1) and a constitutional unit (B2) derived from a compound represented by Formula (b2). (where Z is a diphenylfluorene structure or a hexafluorodiphenylpropane structure, X¹ and X² each represent -O-, -C(CH₃)₂-, and -C(CF₃)₂-.)

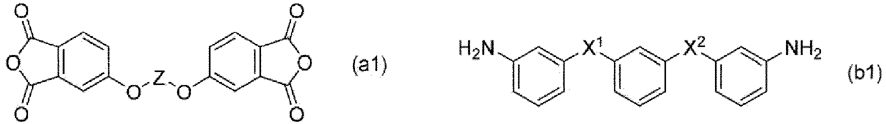

## Description

### Technical Field

The present invention relates to a polyimide resin, a polyimide varnish, a polyimide film, and a temporary fixing material composition.

### Background Art

Semiconductor electronic components have become lighter and thinner in recent years. In 2.5 dimensional or three-dimensional semiconductor packaging, a technique has been developed in which semiconductor chips are thinned and stacked in multiple layers while being connected by a through-silicon-via (TSV) in order to achieve high integration and densification of semiconductor elements. Also, in the field of power semiconductors, semiconductor electronic circuit boards have become thinner in order to reduce conduction losses for energy saving.

As a method of thinning a semiconductor electronic circuit formed substrate, for example, grinding of a surface having no circuits formed (back surface) of the semiconductor electronic circuit formed substrate is performed. Typically, in the grinding process, a back grinding tape (protective tape) is attached to the opposite side of the surface to be ground thereby preventing damage during grinding, however, the back grinding tape has insufficient heat resistance and is not suitable for TSVs mentioned above and the high-temperature process in the field of power semiconductors.

Therefore, a method has been proposed in which a semiconductor electronic circuit formed substrate is fixed to a supporting substrate, such as a silicon wafer or a glass substrate having a supporting property, with a temporary fixing material (adhesive layer) interposed therebetween, and subjected to grinding, back side circuit formation processing and the like, and then the processed semiconductor circuit formed substrate is separated from the supporting substrate. This temporary fixing material is required to have heat resistance, separability, and low-temperature drying/low-temperature adhesiveness enough to withstand the manufacturing process of the semiconductor electronic component.

As a method of separating the semiconductor electronic circuit formed substrate from the supporting substrate, there have been proposed a method of dissolving the temporary fixing material with a solvent and then separating the temporary fixing material (See, for example, Patent Document 1) and a method of irradiation with a laser from the supporting substrate side and then separating the temporary fixing material. In addition, a polyimide-based material has been proposed as a temporary fixing material excellent in heat resistance (See, for example, Patent Document 2.).

### Citation List

### Patent Document

Patent Document 1: JP 2011-233679 A
Patent Document 2: JP 2010-254808 A

### Summary of Invention

### Technical Problem

In the field of power semiconductors, heat resistance of 350°C or higher is required in an annealing step or a back metal forming step after ion implantation. On the other hand, it is preferable that drying and adhesion can be performed at a lower temperature when the temporary fixing material is formed into a film in order to save energy in processes and improve productivity.

It is also required that the temporary fixing material can be easily separated after completion of the heat treatment step.

When a polyimide-based temporary fixing material is separated with a solvent, a polar solvent is preferable as a solvent for separating the polyimide, but from the concern of a decrease in solubility due to moisture absorption of the solvent, the temporary fixing material is required to be dissolved in a polar solvent with low water absorption, such as γ-butyrolactone or cyclopentanone, for example. As described above, the temporary fixing material is required to be easily dissolved in solvents having various properties.

When the polyimide-based temporary fixing material is separated by laser irradiation, the polyimide-based temporary fixing material is required to be excellent in characteristics of absorbing light having a wavelength of 355 nm in order to be able to respond to 355 nm wavelength solid-state UV lasers in particular.

As described above, there is a demand for a temporary fixing material that can bond a semiconductor electronic circuit formed substrate and a supporting substrate at a low temperature, can go through a semiconductor electronic component manufacturing process including a heat treatment at 350°C or higher, furthermore can be separated with various solvents, and also can be separated by lasers.

Therefore, an object of the present invention is to provide a polyimide resin, a polyimide film, each of which has a low elastic modulus, achieves both a low glass transition temperature and heat resistance, is excellent in solubility in solvents, and has a low light transmittance at a wavelength of 355 nm; a polyimide varnish containing the polyimide resin; and a temporary fixing material composition containing the polyimide resin.

### Solution to Problem

The present inventors have found that a polyimide resin containing a combination of a constitutional unit derived from a specific tetracarboxylic dianhydride and a constitutional unit derived from a specific diamine can solve the problems mentioned above, and have completed the present invention.

That is, the present invention relates to the following <1> to <10>:
<1> A polyimide resin including a constitutional unit A derived from a tetracarboxylic dianhydride and a constitutional unit B derived from a diamine,
   the constitutional unit A including a constitutional unit (A1) derived from a compound represented by the following Formula (a1), and
   the constitutional unit B including a constitutional unit (B1) derived from a compound represented by the following Formula (b1). 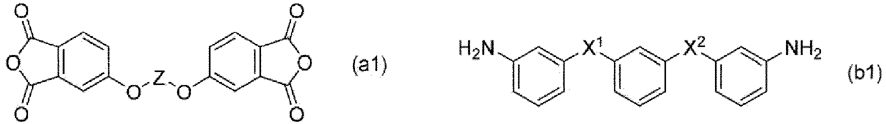
   (In the formulas, Z is a group represented by the following Formula (1) or a group represented by the following Formula (2). X¹ and X² each independently represent -O-, -C (CH₃)₂-, or -C(CF₃)₂-) 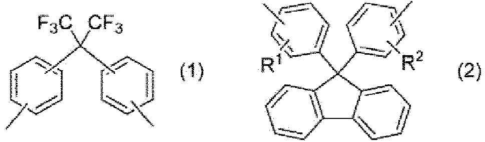
   (In Formula (2), R¹ and R² are each independently a hydrogen atom, a fluorine atom, or an alkyl group having from 1 to 5 carbon atoms)
<2> The polyimide resin according to <1>, wherein a proportion of the constitutional unit (A1) in the constitutional unit A is from 30 to 100 mol%.
<3> The polyimide resin according to <1> or <2>, wherein a proportion of the constitutional unit (B1) in the constitutional unit B is from 30 to 100 mol%.
<4> The polyimide resin according to any one of <1> to <3>, wherein the constitutional unit (A1) includes at least one selected from the group consisting of a constitutional unit (A11) derived from a compound represented by the following Formula (a11) and a constitutional unit (A12) derived from a compound represented by the following Formula (a12). 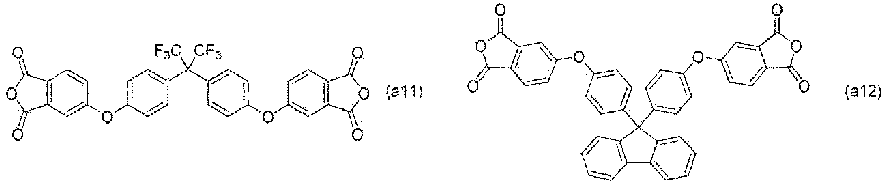
<5> The polyimide resin according to any one of <1> to <4>, wherein the constitutional unit (B1) includes a constitutional unit (B11) derived from a compound represented by the following Formula (b11). 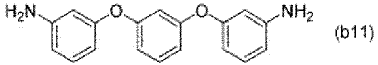
<6> The polyimide resin according to any one of <1> to <5>, wherein the constitutional unit B further includes a constitutional unit (B2) derived from a compound represented by the following Formula (b2). 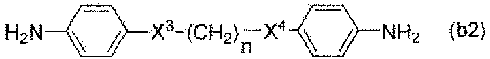 (In the formula, X³ and X⁴ each independently represent -O-, -COO-, or -OCO-. n is an integer of from 2 to 10)
<7> The polyimide resin according to any one of <1> to <6>, including a constitutional unit represented by the following general Formula (3). 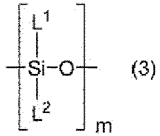 (In the formula, L¹ and L² are each independently a monovalent aliphatic hydrocarbon having from 1 to 5 carbon atoms or a monovalent aromatic group having from 6 to 10 carbon atoms, and m is an integer of from 1 to 200)
<8> A polyimide varnish containing the polyimide resin according to any one of <1> to <7> and an organic solvent.
<9> A polyimide film including the polyimide resin according to any one of <1> to <7>.
<10> A temporary fixing material composition including the polyimide resin according to any one of <1> to <7>.

### Advantageous Effects of Invention

According to the present invention, it is possible to provide a polyimide resin that has a low elastic modulus, achieves both a low glass transition temperature and heat resistance, is excellent in solubility in solvents, and has a low light transmittance at a wavelength of 355 nm; a polyimide film; a polyimide varnish containing the polyimide resin; and a temporary fixing material composition containing the polyimide resin.

### Description of Embodiments

### [Polyimide resin]

The polyimide resin of the present invention is a polyimide resin having a constitutional unit A derived from a tetracarboxylic dianhydride and a constitutional unit B derived from a diamine,
the constitutional unit A including a constitutional unit (A1) derived from a compound represented by the following Formula (a1), and
the constitutional unit B including a constitutional unit (B 1) derived from a compound represented by the following Formula (b1). 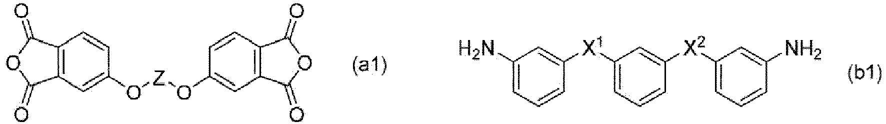
(In the formulas, Z is a group represented by the following Formula (1) or a group represented by the following Formula (2). X¹ and X² each independently represent -O-, -C (CH₃)₂-, or -C(CF₃)₂-) 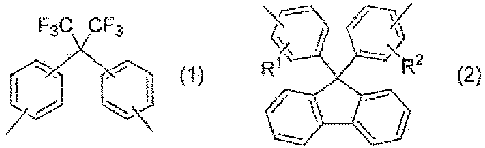
(In Formula (2), R¹ and R² are each independently a hydrogen atom, a fluorine atom, or an alkyl group having from 1 to 5 carbon atoms)

Note that, the reason why the polyimide resin of the present invention has a low elastic modulus, achieves both a low glass transition temperature and heat resistance, is excellent in solubility in solvents, and has a low light transmittance at a wavelength of 355 nm is not clear, but is considered to be as follows.

The polyimide resin of the present invention contains a constitutional unit derived from a specific tetracarboxylic dianhydride having an ether skeleton and a bulky skeleton (trifluoromethyl group or cardo structure) and includes a constitutional unit derived from a nonlinear aromatic diamine, and thereby the polyimide resin of the present invention is thought to achieve contradictory characteristics such as heat resistance (high weight loss temperature) and a low glass transition temperature, and further, to have solubility in solvents and light absorbency of a specific wavelength.

### <Constitutional unit A>

The constitutional unit A is a constitutional unit derived from tetracarboxylic dianhydride in the polyimide resin.

The constitutional unit A contains a constitutional unit (A1) derived from a compound represented by the following Formula (a1). 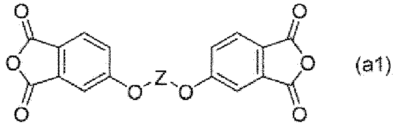
(In the formula, Z is a group represented by the following Formula (1) or a group represented by the following Formula (2)) 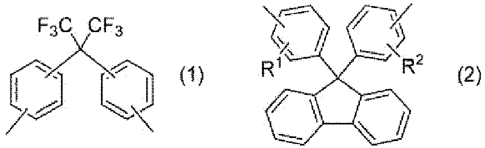
(In Formula (2), R¹ and R² are each independently a hydrogen atom, a fluorine atom, or an alkyl group having from 1 to 5 carbon atoms)

The constitutional unit A includes the constitutional unit (A1), and thereby the glass transition temperature of the polyimide resin can be lowered while the heat resistance of the polyimide resin is improved. Moreover, solubility in solvents and light absorbency at a wavelength of 355 nm can be improved.

The compound represented by Formula (a1) preferably contains at least one selected from the group consisting of a compound represented by the following Formula (a11) and a compound represented by the following Formula (a12), and is more preferably at least one selected from the group consisting of a compound represented by the following Formula (a11) and a compound represented by the following Formula (a12).

In particular, from a point of view of solubility in solvents, a compound represented by the following Formula (a11) is preferable, and from a point of view of light absorbency at a wavelength of 355 nm, a compound represented by the following Formula (a12) is preferable.

That is, the constitutional unit (A1) preferably contains at least one selected from the group consisting of a constitutional unit (A11) derived from a compound represented by the following Formula (a11) and a constitutional unit (A12) derived from a compound represented by the following Formula (a12), and is more preferably at least one selected from the group consisting of a constitutional unit (A11) derived from a compound represented by the following Formula (a11) and a constitutional unit (A12) derived from a compound represented by the following Formula (a12).

In particular, from a point of view of solubility in solvents, the constitutional unit (A11) derived from a compound represented by the following Formula (a11) is preferable, and from a point of view of light absorbency at a wavelength of 355 nm, the constitutional unit (A12) derived from a compound represented by the following Formula (a12) is preferable.

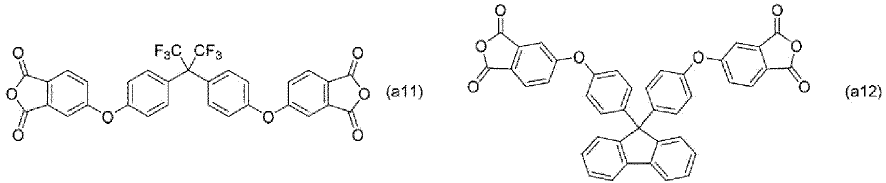

The compound represented by Formula (a11) is 2,2-bis[4-(3,4-dicarboxyphenoxy)phenyl]hexafluoropropane dianhydride (6F-BPADA).

The constitutional unit A includes the constitutional unit (A11), and thereby the glass transition temperature of the polyimide resin can be lowered while the heat resistance of the polyimide resin is improved. Moreover, solubility in solvents and light absorbency at a wavelength of 355 nm can be improved.

The compound represented by Formula (a12) is 9,9-bis[4-(3,4-dicarboxyphenoxy)phenyl]fluorene dianhydride (BPF-PA).

The constitutional unit A includes the constitutional unit (A12), and thereby the glass transition temperature of the polyimide resin can be lowered while the heat resistance of the polyimide resin is improved. Moreover, solubility in solvents and light absorbency at a wavelength of 355 nm can be improved.

From a point of view of achieving both a low glass transition temperature and heat resistance, the constitutional unit (A1) preferably includes the constitutional unit (A11), and the constitutional unit (A1) is more preferably the constitutional unit (A11).

The constitutional unit A may consist only of the constitutional unit (A1) or may contain a constitutional unit other than the constitutional unit (A1), but preferably contains a constitutional unit (A2) derived from a compound represented by the following Formula (a2) as a constitutional unit other than the constitutional unit (A1). 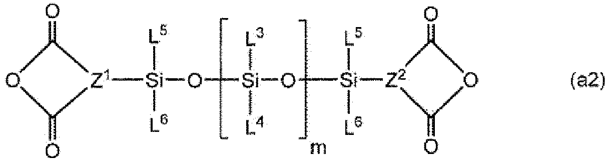 (In the formula, L³, L⁴, L⁵, and L⁶ each independently represent a monovalent aliphatic hydrocarbon having 1 to 5 carbon atoms or a monovalent aromatic group having 6 to 10 carbon atoms, Z¹ and Z² each independently represent a trivalent aliphatic group or a trivalent aromatic group, and m is an integer of from 1 to 200)

In Formula (a2), the trivalent aliphatic group or trivalent aromatic group in Z¹ and Z² may be substituted with a fluorine atom or may contain an oxygen atom. When an oxygen atom is contained as an ether bond, the number of carbon atoms shown below refers to all the number of carbon atoms contained in the aliphatic group or in the aromatic group.

Examples of the trivalent aliphatic group include a trivalent saturated or unsaturated aliphatic group having from 1 to 20 carbon atoms. The number of carbon atoms in the trivalent aliphatic group is preferably from 4 to 20.

Examples of the trivalent saturated aliphatic group include: a group in which an alkylene group having from 1 to 19 carbon atoms is bonded to a methylidyne group; and a group in which 1 to 3 alkyleneoxy groups selected from the group consisting of alkyleneoxy groups each having from 1 to 19 carbon atoms are bonded to a methylidyne group. Examples of the alkylene group include a methylene group, an ethylene group, a propylene group, a trimethylene group, a tetramethylene group, a hexamethylene group, an octamethylene group, a decamethylene group, and a dodecamethylene group, and examples of the alkyleneoxy group include a propyleneoxy group and a trimethyleneoxy group.

Examples of the trivalent unsaturated aliphatic group include a group in which at least one alkenylene group having from 2 to 19 carbon atoms is bonded to a methylidyne group. An alkylene group or an alkyleneoxy group may be further bonded to the methylidyne group. Examples of the alkenylene group include a vinylene group and a propenylene group.

Examples of the trivalent aromatic group include a group in which 1 to 3 groups selected from the group consisting of an arylene group having from 6 to 20 carbon atoms and an aralkylene group having from 7 to 20 carbon atoms are bonded to a methylidyne group or to an arylidine group having from 6 to 20 carbon atoms. Specific examples of the arylene group include an o-phenylene group, an m-phenylene group, a p-phenylene group, a 4,4'-biphenylylene group, and a 2,6-naphthylene group.

As Z¹ and Z², in particular, a group in which a trimethylene group and a methylene group are bonded to a methylidyne group, and a group in which a p-phenylene group and a methylene group are bonded to a methylidyne group are preferable, and a group in which a trimethylene group and a methylene group are bonded to a methylidyne group is more preferable.

In Formula (a2), as the monovalent aliphatic hydrocarbon having from 1 to 5 carbon atoms in L³ to L⁶, a monovalent saturated or unsaturated aliphatic group can be mentioned. As the monovalent saturated aliphatic group, mention may be made of an alkyl group having from 1 to 5 carbon atoms, and examples thereof include a methyl group, an ethyl group, and a propyl group. The monovalent saturated aliphatic group is preferably a methyl group. As the monovalent unsaturated aliphatic group, mention may be made of an alkenyl group having from 2 to 5 carbon atoms, and examples thereof include a vinyl group and a propenyl group. These groups each may be substituted with a fluorine atom.

Examples of the monovalent aromatic group having from 6 to 10 carbon atoms in L³ to L⁶ of Formula (a2) include an aryl group having from 6 to 10 carbon atoms, an aryl group substituted with an alkyl group having from 7 to 10 carbon atoms, and an aralkyl group having from 7 to 10 carbon atoms. As the monovalent aromatic group, an aryl group is preferable, and a phenyl group is more preferable.

L³, L⁴, L⁵, and L⁶ are preferably at least one selected from the group consisting of a monovalent saturated aliphatic group and a monovalent aromatic group, more preferably at least one selected from the group consisting of a methyl group and a phenyl group, and still more preferably a methyl group.

In Formula (a2), m is an integer of from 1 to 200, preferably an integer of from 10 to 100.

As described above, among the compounds represented by Formula (a2) set forth above, a compound represented by Formula (a21) set forth below is preferable. 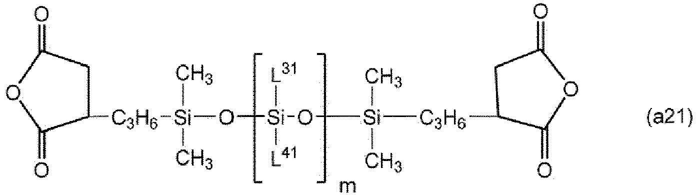 (In Formula (a21), L³¹ and L⁴¹ each independently represent a methyl group or a phenyl group, m has the same meaning as m in Formula (a2), and its preferred range is also the same.)

In Formula (a21), m is an integer of from 1 to 200, preferably an integer of from 10 to 100.

L³¹ and L⁴¹ each independently represent a methyl group or a phenyl group, preferably a methyl group. Note that, a methyl group is preferably bonded as L⁴¹ to a silicon atom to which a methyl group is bonded as L³¹, and a phenyl group is preferably bonded as L⁴¹ to a silicon atom to which a phenyl group is bonded as L³¹.

The functional group equivalent of the compound represented by Formula (a2) is preferably from 50 to 3000 g/mol, more preferably from 100 to 1000 g/mol, and still more preferably from 150 to 700 g/mol.

Note that, the functional group equivalent means the mass of the compound represented by Formula (a2) per 1 mol of the functional group (carboxy group).

Among the compounds represented by the general Formula (a2), examples of commercially available products thereof include "X-22-168" series available from Shin-Etsu Chemical Co., Ltd.

The constitutional unit A contains the constitutional unit (A2), and thereby the elastic modulus can be lowered, and both low glass transition temperature and heat resistance can be achieved.

The mole ratio [(A1)/(A2)] of the constitutional unit (A1) to the constitutional unit (A2) in the constitutional unit A is preferably from 70/30 to 100/0, more preferably from 80/20 to 100/0, still more preferably from 85/15 to 100/0, even more preferably from 85/15 to 99/1, even more preferably from 85/15 to 97/3, and even more preferably from 85/15 to 95/5. When the mole ratio of the constitutional unit (A1) to the constitutional unit (A2) is 100/0, the constitutional unit A does not contain the constitutional unit (A2). By using this mole ratio, the elastic modulus can be lowered, and both a low glass transition temperature and heat resistance can be achieved.

The proportion of the constitutional unit (A1) in the constitutional unit A is preferably 30 mol% or more, more preferably 50 mol% or more, and from points of view of heat resistance and solubility in solvents, still more preferably 70 mol% or more, even more preferably 80 mol% or more, even more preferably 85 mol% or more, even more preferably 90 mol% or more, even more preferably 95 mol% or more, and preferably 100 mol% or less. The constitutional unit A may consist only of the constitutional unit (A1).

The proportion of the constitutional unit (A2) in the constitutional unit A is preferably from 0 to 30 mol%, more preferably from 0 to 20 mol%, still more preferably from 0 to 15 mol%, even more preferably from 1 to 15 mol%, even more preferably from 3 to 15 mol%, and even more preferably from 5 to 15 mol%.

The proportion of the sum of the constitutional unit (A1) and the constitutional unit (A2) in the constitutional unit A is preferably 50 mol% or more, more preferably 70 mol% or more, still more preferably 90 mol% or more, and preferably 100 mol% or less. The constitutional unit A may consist only of the constitutional unit (A1) and the constitutional unit (A2).

The constitutional unit A may include a constitutional unit other than the constitutional unit (A1) and the constitutional unit (A2). The tetracarboxylic dianhydride that provides such a constitutional unit is not particularly limited, and examples thereof include alicyclic tetracarboxylic dianhydrides, aliphatic tetracarboxylic dianhydrides and aromatic tetracarboxylic dianhydrides excluding the compound represented by Formula (a1).

Note that, in the present specification, the term "aromatic tetracarboxylic dianhydride" refers to a tetracarboxylic dianhydride including one or more aromatic rings, the term "alicyclic tetracarboxylic dianhydride" refers to a tetracarboxylic dianhydride including one or more alicyclic rings and including no aromatic ring, and "aliphatic tetracarboxylic dianhydride" refers to a tetracarboxylic dianhydride including no aromatic ring and no alicyclic ring.

The constitutional unit optionally included in the constitutional unit A may be of one type or two or more types.

### <Constitutional unit B>

The constitutional unit B is a constitutional unit derived from a diamine in the polyimide resin.

The constitutional unit B contains a constitutional unit (B1) derived from a compound represented by the following Formula (b1). 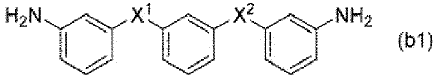 (In the formula, X¹ and X² each independently represent -O-, -C(CH₃)₂-, or -C(CF₃)₂-)

The constitutional unit B includes the constitutional unit (B1), and thereby in particular the glass transition temperature can be lowered and the solubility in solvents can be improved.

In Formula (b1), X¹ and X² each independently represent -O-, -C(CH₃)₂-, or -C (CF₃)₂-.

X¹ is preferably at least one selected from the group consisting of -O-, -C(CH₃)₂-, and - C(CF₃)₂-, and more preferably -O-.

X² is preferably at least one selected from the group consisting of -O-, -C(CH₃)₂-, and - C(CF₃)₂-, and more preferably -O-.

A specific example of the compound represented by Formula (b1) is at least one selected from the group consisting of 1,3-bis(3-aminophenoxy)benzene (TPE-M), 1,3-bis[2-(3-aminophenyl)-2-propyl]benzene, and 1,3-bis[2-(3-aminophenyl)-2-hexafluoropropyl]benzene, and is more preferably 1,3-bis(3-aminophenoxy)benzene (TPE-M). That is, the constitutional unit (B1) preferably contains a constitutional unit (B11) derived from a compound represented by the following Formula (b11), and more preferably, the constitutional unit (B1) is a constitutional unit (B11) derived from a compound represented by the following Formula (b11).

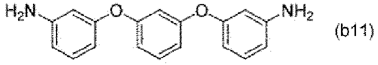

The proportion of the constitutional unit (B 1) in the constitutional unit B is preferably 30 mol% or more, more preferably 50 mol% or more, and from points of view of heat resistance, colorlessness, and strength, still more preferably 70 mol% or more, even more preferably 80 mol% or more, even more preferably 90 mol% or more, even more preferably 95 mol% or more, and preferably 100 mol% or less. The constitutional unit B may consist only of the constitutional unit (B 1).

The constitutional unit B may consist only of the constitutional unit (B 1) or may contain a constitutional unit other than the constitutional unit (B 1), but preferably, the constitutional unit B further contains a constitutional unit (B2) derived from a compound represented by the following Formula (b2) as a constitutional unit other than the constitutional unit (B 1). 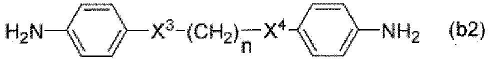 (In the formula, X³ and X⁴ each independently represent -O-, -COO-, or -OCO-. n is an integer of from 2 to 10)

In Formula (b2), X³ and X⁴ each independently represent -O-, -COO-, or -OCO-.

X³ is preferably at least one selected from the group consisting of -O-, -COO-, and - OCO-, and more preferably -O-.

X⁴ is preferably at least one selected from the group consisting of -O-, -COO-, and - OCO-, and more preferably -O-. Note that, the group represented by -OCO- represents a group (carboxylate group) in which an aromatic ring and a carbon atom of X³ are directly bonded.

n is an integer of from 2 to 10, preferably an integer of from 3 to 6, and more preferably an integer of from 4 to 6.

The constitutional unit (B2) preferably includes at least one constitutional unit selected from the group consisting of a constitutional unit (B21) derived from a compound represented by the following Formula (b21), a constitutional unit (B22) derived from a compound represented by the following Formula (b22), a constitutional unit (B23) derived from a compound represented by the following Formula (b23), a constitutional unit (B24) derived from a compound represented by the following Formula (b24), and a constitutional unit (B25) derived from a compound represented by the following Formula (b25), and more preferably includes a constitutional unit (B21) derived from a compound represented by the following Formula (b21).

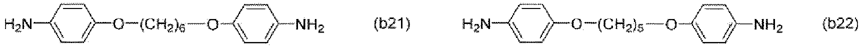

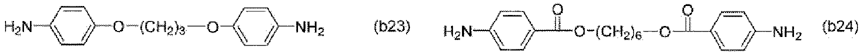

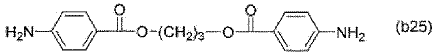

The compound represented by Formula (b21) is 4,4'-hexamethylenebis(oxyaniline) (DA6MG), the compound represented by Formula (b22) is 4,4'-pentamethylenebis(oxyaniline) (DA5MG), the compound represented by Formula (b23) is 4,4'-trimethylenebis(oxyaniline) (DA3MG), the compound represented by Formula (b24) is hexamethylene bis(4-aminobenzoate), and the compound represented by Formula (b25) is trimethylene bis(4-aminobenzoate).

The constitutional unit B includes the constitutional unit (B2), and thereby the elastic modulus can be lowered.

The mole ratio [(B1)/(B2)] of the constitutional unit (B1) to the constitutional unit (B2) in the constitutional unit B is preferably from 30/70 to 100/0, more preferably from 40/60 to 100/0, and from a point of view of reducing the elastic modulus and improving laser separability, the mole ratio is still more preferably from 40/60 to 80/20, even more preferably from 40/60 to 60/40. When the mole ratio of the constitutional unit (B 1) to the constitutional unit (B2) is 100/0, the constitutional unit B does not include the constitutional unit (B2).

The proportion of the constitutional unit (B2) in the constitutional unit B is preferably from 0 to 70 mol%, more preferably from 0 to 60 mol%, still more preferably from 20 to 60 mol%, and even more preferably from 40 to 60 mol%.

The proportion of the sum of the constitutional unit (B 1) and the constitutional unit (B2) in the constitutional unit B is preferably 50 mol% or more, more preferably 70 mol% or more, still more preferably 90 mol% or more, and preferably 100 mol% or less. The constitutional unit B may consist only of the constitutional unit (B 1) and the constitutional unit (B2).

The constitutional unit B may include a constitutional unit other than the constitutional unit (B 1) and the constitutional unit (B2). The diamine that provides such a constitutional unit is not particularly limited, and examples thereof include alicyclic diamines, aliphatic diamines and aromatic diamines excluding the compound represented by Formula (b1) and excluding the compound represented by Formula (b2).

Note that, in the present specification, the term "aromatic diamine" refers to a diamine including one or more aromatic rings, the term "alicyclic diamine" refers to a diamine including one or more alicyclic rings and including no aromatic ring, and the term "aliphatic diamine" refers to a diamine including no aromatic ring and no alicyclic ring.

The constitutional unit optionally included in the constitutional unit B, other than the constitutional unit (B1) and the constitutional unit (B2), may be of one type or two or more types.

Among the constitutional units other than the constitutional unit (B 1) and the constitutional unit (B2), the constitutional unit (B3) derived from a compound represented by the following Formula (b3) is preferable. 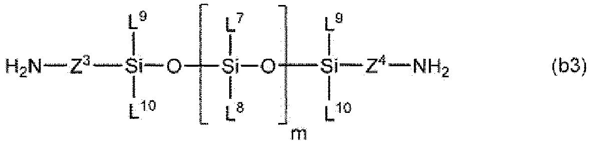 (In the formula, L⁷, L⁸, L⁹, and L¹⁰ are each independently a monovalent aliphatic hydrocarbon having from 1 to 5 carbon atoms or a monovalent aromatic group having from 6 to 10 carbon atoms, Z³ and Z⁴ are each independently a divalent aliphatic group or a divalent aromatic group, and m is an integer of from 1 to 200.)

In Formula (b3), the divalent aliphatic group or divalent aromatic group in Z³ and Z⁴ may be substituted with a fluorine atom or may contain an oxygen atom. When an oxygen atom is contained as an ether bond, the number of carbon atoms shown below refers to all the number of carbon atoms contained in the aliphatic group or in the aromatic group.

As the divalent aliphatic group, mention may be made of a divalent saturated or unsaturated aliphatic group each having from 1 to 20 carbon atoms. The number of carbon atoms in the divalent aliphatic group is preferably from 3 to 20.

As the divalent saturated aliphatic group, mention may be made of an alkyleneoxy group and an alkylene group each having from 1 to 20 carbon atoms, examples of the alkylene group include a methylene group, an ethylene group, a propylene group, a trimethylene group, a tetramethylene group, a hexamethylene group, an octamethylene group, a decamethylene group, and a dodecamethylene group; and examples of the alkyleneoxy group include a propyleneoxy group and a trimethyleneoxy group.

As the divalent unsaturated aliphatic group, mention may be made of an alkenylene group having from 2 to 20 carbon atoms, and examples thereof include a vinylene group, a propenylene group, and an alkylene group having an unsaturated double bond at the terminus.

Examples of the divalent aromatic group include an arylene group having from 6 to 20 carbon atoms and an aralkylene group having from 7 to 20 carbon atoms. As specific examples of the arylene group having from 6 to 20 carbon atoms in Z⁴ and Z⁵, mention may be made of an o-phenylene group, an m-phenylene group, a p-phenylene group, a 4,4'-biphenylylene group, and a 2,6-naphthylene group.

As Z³ and Z⁴, in particular, a trimethylene group and a p-phenylene group are preferable, and a trimethylene group is more preferable.

In Formula (b3), as the monovalent aliphatic hydrocarbon having from 1 to 5 carbon atoms in L⁷ to L¹⁰, mention may be made of a monovalent saturated or unsaturated aliphatic group. As the monovalent saturated aliphatic group, mention may be made of an alkyl group having from 1 to 5 carbon atoms, and examples thereof include a methyl group, an ethyl group, and a propyl group. As the monovalent unsaturated aliphatic group, mention may be made of an alkenyl group having from 2 to 5 carbon atoms, and examples thereof include a vinyl group and a propenyl group. These groups each may be substituted with a fluorine atom. The monovalent saturated aliphatic group is preferably a methyl group.

Examples of the monovalent aromatic group having from 6 to 10 carbon atoms in L⁷ to L¹⁰ of Formula (b3) include an aryl group having from 6 to 10 carbon atoms, an aryl group substituted with an alkyl group having from 7 to 10 carbon atoms, and an aralkyl group having from 7 to 10 carbon atoms. As the monovalent aromatic group, an aryl group is preferable, and a phenyl group is more preferable.

L⁷, L⁸, L⁹, and L¹⁰ are preferably at least one selected from the group consisting of a monovalent saturated aliphatic group and a monovalent aromatic group, more preferably at least one selected from the group consisting of a methyl group and a phenyl group, and still more preferably a methyl group.

In Formula (b3), m is an integer of from 1 to 200, preferably an integer of from 10 to 100.

As described above, among the compounds represented by the above Formula (b3), a compound represented by the following Formula (b31) is preferable. 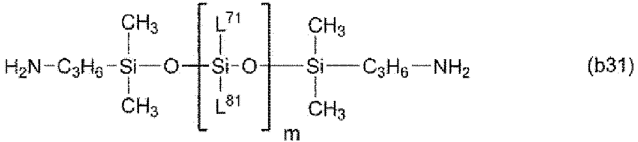 (In Formula (b31), L⁷¹ and L⁸¹ each independently represent a methyl group or a phenyl group, m has the same meaning as m in Formula (b3), and its preferred range is also the same.)

In Formula (b31), m is an integer of from 1 to 200, preferably an integer of from 10 to 100.

L⁷¹ and L⁸¹ each independently represent a methyl group or a phenyl group, preferably a methyl group. Note that, a methyl group is preferably bonded as L⁸¹ to a silicon atom to which a methyl group is bonded as L⁷¹, and a phenyl group is preferably bonded as L⁸¹ to a silicon atom to which a phenyl group is bonded as L⁷¹.

The functional group equivalent (amine equivalent) of the compound represented by Formula (b3) is preferably from 100 to 5000 g/mol, more preferably from 400 to 4000 g/mol, and still more preferably from 500 to 3000 g/mol.

Note that, the term "functional group equivalent" refers to the mass of the compound represented by Formula (b3) per 1 mol of the functional group (amino group).

Among the compound represented by the general Formula (b3) set forth above, examples of commercially available products thereof include "X-22-9409", "X-22-1660B", "X-22-161A", and "X-22-161B" available from Shin-Etsu Chemical Co., Ltd.

The constitutional unit B includes the constitutional unit (B3), and thereby the elastic modulus can be lowered, and both a low glass transition temperature and heat resistance can be achieved.

The mole ratio [((B 1) + (B2))/(B3)] of the sum of the constitutional unit (B1) and the constitutional unit (B2) to the constitutional unit (B3) in the constitutional unit B is preferably from 70/30 to 100/0, more preferably from 80/20 to 100/0, still more preferably from 85/15 to 100/0, even more preferably from 85/15 to 99/1, even more preferably from 85/15 to 97/3, and even more preferably from 85/15 to 95/5. When the mole ratio of the sum of the constitutional unit (B1) and the constitutional unit (B2) to the constitutional unit (B3) is 100/0, the constitutional unit B does not include the constitutional unit (B3). By using this mole ratio, the elastic modulus can be lowered, and both a low glass transition temperature and heat resistance can be achieved.

The proportion of the constitutional unit (B3) in the constitutional unit B is preferably from 0 to 30 mol%, more preferably from 0 to 20 mol%, and still more preferably from 0 to 15 mol%. When the constitutional unit B contains the constitutional unit (B3), the proportion of a compound that provides the constitutional unit (B3) in the constitutional unit B is preferably from 1 to 30 mol%, more preferably from 3 to 20 mol%, and still more preferably from 5 to 15 mol%.

The proportion of the sum of the constitutional unit (B 1), the constitutional unit (B2) and the constitutional unit (B3) in the constitutional unit B is preferably 50 mol% or more, more preferably 70 mol% or more, still more preferably 90 mol% or more, and preferably 100 mol% or less. The constitutional unit B may consist only of the constitutional unit (B 1), the constitutional unit (B2), and the constitutional unit (B3).

### <Properties of polyimide resin>

The number average molecular weight of the polyimide resin is preferably from 5000 to 300000 from a point of view of the mechanical strength of the resulting polyimide film. Note that the number average molecular weight of the polyimide resin can be determined, for example, in terms of standard polymethyl methacrylate (PMMA) by gel permeation chromatography measurement.

The polyimide resin may include a structure other than a polyimide chain (a structure formed by imide bonds between the constitutional unit A and the constitutional unit B). As the structure, other than the polyimide chain, that can be contained in the polyimide resin, examples thereof include a structure containing an amide bond.

The polyimide resin preferably contains a polyimide chain (a structure formed by imide bonds between the constitutional unit A and the constitutional unit B) as a main structure. Therefore, the proportion of the polyimide chain in the polyimide resin is preferably 50 mass% or more, more preferably 70 mass% or more, still more preferably 90 mass% or more, and even more preferably 99 mass% or more. The proportion is preferably 100 mass% or less. The proportion is even more preferably 100 mass%, and the polyimide resin may consist only of polyimide chains.

The polyimide resin preferably contains a constitutional unit represented by the following general Formula (3). 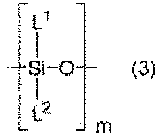 (In the formula, L¹ and L² are each independently a monovalent aliphatic hydrocarbon having from 1 to 5 carbon atoms or a monovalent aromatic group having from 6 to 10 carbon atoms, and m is an integer of from 1 to 200)

In Formula (3), as the monovalent aliphatic hydrocarbon having from 1 to 5 carbon atoms in L¹ and L², a monovalent saturated or unsaturated aliphatic group can be mentioned. As the monovalent saturated aliphatic group, mention may be made of an alkyl group having from 1 to 5 carbon atoms, and examples thereof include a methyl group, an ethyl group, and a propyl group. The monovalent saturated aliphatic group is preferably a methyl group. As the monovalent unsaturated aliphatic group, mention may be made of an alkenyl group having from 2 to 5 carbon atoms, and examples thereof include a vinyl group and a propenyl group. These groups each may be substituted with a fluorine atom.

Examples of the monovalent aromatic group having from 6 to 10 carbon atoms in L¹ and L² in Formula (3) include an aryl group having from 6 to 10 carbon atoms, an aryl group substituted with an alkyl group having from 7 to 10 carbon atoms, and an aralkyl group having from 7 to 10 carbon atoms. As the monovalent aromatic group, an aryl group is preferable, and a phenyl group is more preferable.

L¹ and L² are preferably at least one selected from the group consisting of a monovalent saturated aliphatic group and a monovalent aromatic group, more preferably at least one selected from the group consisting of a methyl group and a phenyl group, and still more preferably a methyl group.

In Formula (3), m is an integer of from 1 to 200, preferably an integer of from 10 to 100.

The constitutional unit represented by Formula (3) may be introduced into the polyimide resin by any method, may be present in either the constitutional unit A or the constitutional unit B, may be bonded to the constitutional unit without through an imide bond, but is preferably present in either or both of the constitutional unit A and the constitutional unit B, and is more preferably present in the constitutional unit A.

When the constitutional unit represented by Formula (3) is present in the constitutional unit A, the constitutional unit thereof is preferably the constitutional unit (A2). When the constitutional unit represented by Formula (3) is present in the constitutional unit B, the constitutional unit thereof is preferably the constitutional unit (B3).

### [Method for producing polyimide resin]

The method for producing the polyimide resin of the present invention is not particularly limited, but is preferably a method in which a polyimide resin is obtained by reacting a compound (tetracarboxylic acid component) that provides the constitutional unit A mentioned above with a compound (diamine component) that provides the constitutional unit B mentioned above. According to this method, a polyimide resin is directly obtained from the tetracarboxylic acid component and the diamine component.

According to the present production method, the polyimide resin can be produced by reacting a tetracarboxylic acid component containing a compound that provides the constitutional unit (A1) mentioned above with a diamine component containing a compound that provides the constitutional unit (B 1) mentioned above.

As the compound that provides the constitutional unit (A1), examples thereof include the compound represented by Formula (a1), but not limited thereto, and a derivative thereof that provides the same constitutional unit may be used. Examples of the said derivative include a tetracarboxylic acid corresponding to the tetracarboxylic dianhydride represented by Formula (a1) and an alkyl ester of the said tetracarboxylic acid. Among them, a tetracarboxylic dianhydride represented by Formula (a1) is preferable.

When a compound that provides the constitutional unit (A2) to the tetracarboxylic acid component is contained, as the compound that provides the constitutional unit (A2), examples thereof include a compound represented by Formula (a2), but not limited thereto, and a derivative thereof that provides the same constitutional unit may be used. Examples of the said derivative include a tetracarboxylic acid corresponding to the tetracarboxylic dianhydride represented by Formula (a2) and an alkyl ester of the said tetracarboxylic acid. Among them, a tetracarboxylic dianhydride represented by Formula (a2) is preferable.

The mole ratio [(A1)/(A2)] of the compound that provides the constitutional unit (A1) to the compound that provides the constitutional unit (A2) in the tetracarboxylic acid component is preferably from 70/30 to 100/0, more preferably from 80/20 to 100/0, still more preferably from 85/15 to 100/0, even more preferably from 85/15 to 99/1, even more preferably from 85/15 to 97/3, and even more preferably from 85/15 to 95/5. When the mole ratio is 100/0, the tetracarboxylic acid component does not contain the compound that provides the constitutional unit (A2). By using this mole ratio, the elastic modulus can be lowered, and both a low glass transition temperature and heat resistance can be achieved.

The proportion of the compound that provides the constitutional unit (A1) in the tetracarboxylic acid component is preferably 30 mol% or more, more preferably 50 mol% or more, and from points of view of heat resistance and solubility in solvents, still more preferably 70 mol% or more, even more preferably 80 mol% or more, even more preferably 85 mol% or more, even more preferably 90 mol% or more, even more preferably 95 mol% or more, and preferably 100 mol% or less. The tetracarboxylic acid component may consist only of the compound that provides the constitutional unit (A1).

The proportion of the compound that provides the constitutional unit (A2) in the tetracarboxylic acid component is preferably from 0 to 30 mol%, more preferably from 0 to 20 mol%, still more preferably from 0 to 15 mol%, even more preferably from 1 to 15 mol%, even more preferably from 3 to 15 mol%, and even more preferably from 5 to 15 mol%.

The proportion of the sum of the compound that provides the constitutional unit (A1) and the compound that provides the constitutional unit (A2) in the tetracarboxylic acid component is still more preferably 90 mol% or more and preferably 100 mol% or less. The tetracarboxylic acid component may consist only of the compound that provides the constitutional unit (A1) and the compound that provides the constitutional unit (A2).

The tetracarboxylic acid component may contain a tetracarboxylic dianhydride, other than the compound that provides the constitutional unit (A1) and the compound that provides the constitutional unit (A2). Such a tetracarboxylic dianhydride is not particularly limited, and examples thereof include alicyclic tetracarboxylic dianhydrides, aliphatic tetracarboxylic dianhydrides and aromatic tetracarboxylic dianhydrides excluding the compound represented by Formula (a1).

The tetracarboxylic dianhydride optionally contained in the tetracarboxylic acid component may be of one type or two or more types.

Examples of the compound that provides the constitutional unit (B 1) include the compound represented by Formula (b1), but are not limited to, and a derivative thereof that provides the same constitutional unit may be used. Examples of the said derivative include diisocyanates corresponding to the compound (diamine) represented by Formula (b1). Among them, the compound represented by Formula (b1) (i.e., a diamine) is preferable.

The diamine component may contain a constitutional unit other than the compound that provides the constitutional unit (B1), but preferably further contains a compound that provides the constitutional unit (B2) derived from the compound represented by Formula (b2).

When a compound that provides the constitutional unit (B2) to the tetracarboxylic acid component is contained, as the compound that provides the constitutional unit (B2), examples thereof include a compound represented by Formula (b2), but not limited thereto, and a derivative thereof that provides the same constitutional unit may be used. Examples of the said derivative include diisocyanates corresponding to the compound (diamine) represented by Formula (b2). Among them, the compound represented by Formula (b2) (i.e., a diamine) is preferable.

The mole ratio [(B1)/(B2)] of the compound that provides the constitutional unit (B1) to the compound that provides the constitutional unit (B2) in the diamine component is preferably from 30/70 to 100/0, more preferably from 40/60 to 100/0, and from a point of view of reducing the elastic modulus and improving laser separability, the mole ratio is more preferably from 40/60 to 80/20, still more preferably from 40/60 to 60/40. When the mole ratio is 100/0, the diamine component does not contain the compound that provides the constitutional unit (B2).

The proportion of the compound that provides the constitutional unit (B 1) in the diamine component is preferably 30 mol% or more, more preferably 50 mol% or more, and from points of view of heat resistance, colorlessness, and strength, the proportion is still more preferably 70 mol% or more, even more preferably 80 mol% or more, even more preferably 90 mol% or more, even more preferably 95 mol% or more, and preferably 100 mol% or less. The diamine component may consist only of a compound that provides the constitutional unit (B 1).

The proportion of the compound that provides the constitutional unit (B2) in the diamine component is preferably from 0 to 70 mol%, more preferably from 0 to 60 mol%, still more preferably from 20 to 60 mol%, and even more preferably from 40 to 60 mol%.

The proportion of the sum of the compound that provides the constitutional unit (B 1) and the compound that provides the constitutional unit (B2) in the diamine component is preferably 50 mol% or more, more preferably 70 mol% or more, still more preferably 90 mol% or more, and preferably 100 mol% or less. The diamine component may consist only of the compound that provides the constitutional unit (B1) and the compound that provides the constitutional unit (B2).

The diamine component may contain a diamine other than the compound that provides the constitutional unit (B 1) and the compound that provides the constitutional unit (B2). The diamine that provides such a constitutional unit is not particularly limited, and examples thereof include alicyclic diamines, aliphatic diamines and aromatic diamines excluding the compound represented by Formula (b1) and excluding the compound represented by Formula (b2).

The diamine, other than the constitutional unit (B 1) and the constitutional unit (B2), optionally contained in the diamine component may be of one type or two or more types.

Among diamines other than the compound that provides the constitutional unit (B 1) and the compound that provides the constitutional unit (B2), a compound that provides the constitutional unit (B3) is preferable.

When a compound that provides the constitutional unit (B3) to the tetracarboxylic acid component is contained, examples of the compound that provides the constitutional unit (B3) include a compound represented by Formula (b3), but are not limited thereto, and a derivative thereof that provides the same constitutional unit may be used. Examples of the said derivative include diisocyanates corresponding to the compound (diamine) represented by Formula (b3). Among them, the compound represented by Formula (b3) (i.e., a diamine) is preferable.

The mole ratio [((B 1) + (B2))/(B3)] of the sum of the compound that provides the constitutional unit (B 1) and the compound that provides the constitutional unit (B2) to the compound that provides the constitutional unit (B3) in the diamine component is preferably from 70/30 to 100/0, more preferably from 80/20 to 100/0, still more preferably from 85/15 to 100/0, even more preferably from 85/15 to 99/1, even more preferably from 85/15 to 97/3, and even more preferably from 85/15 to 95/5. When the mole ratio of the sum of the compound that provides the constitutional unit (B 1) and the compound that provides the constitutional unit (B2) to the compound that provides the constitutional unit (B3) is 100/0, the diamine component does not contain the compound that provides the constitutional unit (B3). By using this mole ratio, the elastic modulus of the resulting polyimide resin can be lowered, and both the low glass transition temperature and the heat resistance can be achieved.

The proportion of the compound that provides the constitutional unit (B3) in the diamine component is preferably from 0 to 30 mol%, more preferably from 0 to 20 mol%, and still more preferably from 0 to 15 mol%. When the diamine component contains a compound that provides the constitutional unit (B3), the proportion of the compound that provides the constitutional unit (B3) in the diamine component is preferably from 1 to 30 mol%, more preferably from 3 to 20 mol%, and still more preferably from 5 to 15 mol%.

The proportion of the sum of the compound that provides the constitutional unit (B 1), the compound that provides the constitutional unit (B2), and the compound that provides the constitutional unit (B3) in the diamine component is preferably 50 mol% or more, more preferably 70 mol% or more, still more preferably 90 mol% or more, and preferably 100 mol% or less. The diamine component may consist only of the compound that provides the constitutional unit (B 1), the compound that provides the constitutional unit (B2), and the compound that provides the constitutional unit (B3).

In the present invention, the ratio of the feed amount of the diamine component to the feed amount of the tetracarboxylic acid component used in the production of the polyimide resin is preferably from 0.9 to 1.1 mol of the diamine component per 1 mol of the tetracarboxylic acid component.

In the present invention, other than the tetracarboxylic acid component and the diamine component mentioned above, an end-capping agent may also be used in the production of the polyimide resin. As the end-capping agent, monoamines or dicarboxylic acids are preferable. The feed amount of the end-capping agent to be introduced is preferably from 0.0001 to 0.1 mol, more preferably from 0.001 to 0.06 mol, per 1 mol of the tetracarboxylic acid component. Examples of the end-capping agent of monoamines include methylamine, ethylamine, propylamine, butylamine, benzylamine, 4-methylbenzylamine, 4-ethylbenzylamine, 4-dodecylbenzylamine, 3-methylbenzylamine, 3-ethylbenzylamine, aniline, 3-methylaniline, and 4-methylaniline, and benzylamine and aniline are preferable. As the end-capping agent of dicarboxylic acids, dicarboxylic acids are preferable, and a part thereof may be ring-closed. Examples thereof include phthalic acid, phthalic anhydride, 4-chlorophthalic acid, tetrafluorophthalic acid, 2,3-benzophenone dicarboxylic acid, 3,4-benzophenone dicarboxylic acid, cyclohexane-1,2-dicarboxylic acid, cyclopentane-1,2-dicarboxylic acid, and 4-cyclohexene-1,2-dicarboxylic acid, and phthalic acid and phthalic anhydride are preferable.

The method of reacting the tetracarboxylic acid component with the diamine component described above is not particularly limited, and a known method can be used.

Specific examples of the reaction method include (1) a method in which a tetracarboxylic acid component, a diamine component, and a reaction solvent are fed into a reactor, this mixture is stirred at a temperature from 0 to 80°C for a period of time ranging from 0.5 to 30 hours, followed by increasing the temperature to perform an imidization reaction, (2) a method in which a diamine component and a reaction solvent are fed into a reactor and dissolved, then a tetracarboxylic acid component is added thereto, this mixture is stirred at room temperature of from 0 to 80°C for a period of time ranging from 0.5 to 30 hours as necessary, followed by increasing the temperature to perform an imidization reaction, and (3) a method in which a tetracarboxylic acid component, a diamine component, and a reaction solvent are fed into a reactor, and then immediately increasing the temperature to perform an imidization reaction.

The organic solvent (reaction solvent) used for the production of the polyimide resin may be any organic solvent that does not inhibit the imidization reaction and can dissolve the produced polyimide resin. Examples thereof include aprotic solvents, phenolic solvents, ether solvents, and carbonate solvents.

Specific examples of the aprotic solvent include: amide solvents such as N,N-dimethylformamide, N,N-dimethylacetamide, N-methylcaprolactam, 1,3-dimethylimidazolidinone, tetramethylurea, 3-methoxy-N,N-dimethylpropanamide and 3-butoxy-N,N-dimethylpropanamide; lactone solvents such as γ-butyrolactone (GBL) and γ-valerolactone; glycol solvents such as diethylene glycol dimethyl ether, triethylene glycol and triethylene glycol dimethyl ether; phosphorus-containing amide solvents such as hexamethylphosphoric amide and hexamethylphosphine triamide; sulfur-containing solvents such as dimethyl sulfone, dimethyl sulfoxide and sulfolane; ketone solvents such as acetone, cyclopentanone, cyclohexanone and methylcyclohexanone; amine solvents such as picoline and pyridine; and ester solvents such as (2-methoxy-1-methylethyl) acetate.

Specific examples of the phenolic solvent include phenol, o-cresol, m-cresol, p-cresol, 2,3-xylenol, 2,4-xylenol, 2,5-xylenol, 2,6-xylenol, 3,4-xylenol, and 3,5-xylenol.

Specific examples of the ether solvent include 1,2-dimethoxyethane, bis(2-methoxyethyl) ether, 1,2-bis(2-methoxyethoxy)ethane, bis[2-(2-methoxyethoxy)ethyl]ether, tetrahydrofuran, and 1,4-dioxane.

Specific examples of the carbonate solvent include diethyl carbonate, methylethyl carbonate, ethylene carbonate, and propylene carbonate.

Among the reaction solvents mentioned above, an aprotic solvent is preferable, an amide solvent and a lactone solvent are more preferable, and a lactone solvent is more preferable. The reaction solvents mentioned above may be used singly or two or more types thereof may be used in combination.

In the imidization reaction, the reaction is preferably carried out with a Dean-Stark apparatus or the like to remove water produced during the production. By performing such operation, the degree of polymerization and the degree of imidization can be further increased.

In the imidization reaction described above, a known imidization catalyst can be used. As the imidization catalyst, a base catalyst or an acid catalyst can be mentioned.

Examples of the base catalyst include: organic base catalysts such as pyridine, quinoline, isoquinoline, α-picoline, β-picoline, 2,4-lutidine, 2,6-lutidine, trimethylamine, triethylamine (TEA), tripropylamine, tributylamine, triethylenediamine, imidazole, N,N-dimethylaniline and N,N-diethylaniline; and inorganic base catalysts such as potassium hydroxide, sodium hydroxide, potassium carbonate, sodium carbonate, potassium hydrogen carbonate and sodium hydrogen carbonate.

Examples of the acid catalyst include crotonic acid, acrylic acid, trans-3-hexenoic acid, cinnamic acid, benzoic acid, methylbenzoic acid, oxybenzoic acid, terephthalic acid, benzenesulfonic acid, p-toluenesulfonic acid, and naphthalenesulfonic acid. The imidization catalysts mentioned above may be used singly or two or more types thereof may be used in combination.

Among the catalysts mentioned above, from a point of view of handleability, a base catalyst is preferably used, an organic base catalyst is more preferably used, and at least one selected from the group consisting of triethylamine and triethylenediamine is still more preferably used.

The temperature for the imidization reaction is preferably in a range from 120 to 250°C, and more preferably from 160 to 200°C, from points of view of reaction rate and suppression of gelation or the like. The reaction time preferably ranges from 0.5 to 10 hours after the start of distillation of produced water.

### [Polyimide varnish and Temporary fixing material composition]

The polyimide varnish of the present invention is made by dissolving the polyimide resin of the present invention in an organic solvent. That is, the polyimide varnish of the present invention contains the polyimide resin of the present invention and an organic solvent, and the said polyimide resin is dissolved in the said organic solvent.

The organic solvent is not particularly limited as long as it dissolves the polyimide resin, but as a reaction solvent used in the production of the polyimide resin, it is preferable to use the compound mentioned above singly or a mixture of two or more types thereof.

The polyimide varnish of the present invention may be a polyimide solution per se in which a polyimide resin obtained by a polymerization method is dissolved in a reaction solvent, or may be a diluted solution made by further adding the solvent to the said polyimide solution.

Since the polyimide resin of the present invention has solubility in solvents, a highly concentrated varnish that is stable at room temperature can be made. The polyimide varnish of the present invention preferably contains the polyimide resin of the present invention in an amount of from 5 to 40 mass% and more preferably from 10 to 30 mass%. The viscosity of the polyimide varnish is preferably from 1 to 200 Pa•s, and more preferably from 1 to 100 Pa•s. The viscosity of the polyimide varnish is a value measured at 25°C using an E-type viscometer.

The polyimide varnish of the present invention may contain various additives such as an inorganic filler, an adhesion promoter, a release agent, a flame retardant, an ultraviolet stabilizer, a surfactant, a leveling agent, an antifoaming agent, a fluorescent brightener, a crosslinking agent, a polymerization initiator, and a photosensitizer to the extent that required performance of the polyimide resin and of the temporary fixing material are not compromised.

The method for producing the polyimide varnish of the present invention is not particularly limited, and a known method can be applied.

The temporary fixing material composition of the present invention contains the polyimide resin. Therefore, the polyimide varnish can also be used as the temporary fixing material composition.

The temporary fixing material composition of the present invention is preferably the polyimide resin of the present invention dissolved in an organic solvent. That is, the temporary fixing material composition of the present invention preferably contains the polyimide resin of the present invention and an organic solvent, and the said polyimide resin is more preferably dissolved in the said organic solvent.

The organic solvent is not particularly limited as long as it dissolves the polyimide resin, but as a reaction solvent used in the production of the polyimide resin, it is preferable to use the compound mentioned above singly or a mixture of two or more types thereof.

The temporary fixing material composition of the present invention may be a polyimide solution per se in which a polyimide resin obtained by a polymerization method is dissolved in a reaction solvent, or may be a diluted solution made by further adding the solvent to the said polyimide solution.

Since the polyimide resin of the present invention has solubility in solvents, a highly concentrated temporary fixing material composition stable at room temperature can be made. The temporary fixing material composition of the present invention preferably contains the polyimide resin of the present invention in an amount of from 5 to 40 mass% and more preferably from 10 to 30 mass%. The viscosity of the temporary fixing material composition is preferably from 1 to 200 Pa•s, more preferably from 1 to 100 Pa•s. The viscosity of the temporary fixing material composition is a value measured at 25°C using an E-type viscometer.

The temporary fixing material composition of the present invention may also contain various additives such as an inorganic filler, an adhesion promoter, a release agent, a flame retardant, an ultraviolet stabilizer, a surfactant, a leveling agent, an antifoaming agent, a fluorescent brightener, a crosslinking agent, a polymerization initiator, and a photosensitizer to the extent that required performance of the polyimide resin and of the temporary fixing material are not compromised.

### [Polyimide film]

The polyimide film of the present invention contains the polyimide resin mentioned above. Therefore, the polyimide film of the present invention has a low elastic modulus, achieves both a low glass transition temperature and heat resistance, is excellent in solubility in solvents, and has a small light transmittance at a wavelength of 355 nm.

Suitable physical property values of the polyimide film of the present invention are as follows.

The light transmittance at a wavelength of 355 nm when the thickness is 30 µm is preferably 1.0% or less, more preferably 0.5% or less, still more preferably 0.2% or less, and even more preferably 0.1% or less.

The glass transition temperature is preferably 210°C or lower, more preferably 180°C or lower, and still more preferably 160°C or lower.

The 5% weight loss temperature is preferably 450°C or higher, more preferably 480°C or higher, and still more preferably 500°C or higher.

The weight loss rate during holding at 350°C for 60 minutes is preferably 1.0% or less, more preferably 0.7% or less, and still more preferably 0.4% or less.

The tensile elastic modulus when the thickness is 30 µm is preferably 3.0 GPa or less, more preferably 2.6 GPa or less, and still more preferably 2.3 GPa or less.

Note that the above-mentioned physical property values in the present invention can be specifically measured by the methods described in Examples.

The polyimide film of the present invention contains the polyimide resin mentioned above, has a low elastic modulus, achieves both a low glass transition temperature and heat resistance, is excellent in solubility in solvents, and has a small light transmittance at a wavelength of 355 nm. Therefore, the polyimide film of the present invention can be suitably used as a temporary fixing material by forming the polyimide film of the present invention onto the semiconductor electronic circuit formed substrate by the method mentioned above.

The thickness of the polyimide film of the present invention is not particularly limited, but when the polyimide film is used as a temporary fixing material, the thickness is preferably from 1 to 250 µm, more preferably from 5 to 100 µm, still more preferably from 8 to 80 µm, and even more preferably from 10 to 80 µm.

The thickness of the polyimide film can be easily controlled by adjusting the solid content concentration and viscosity of the varnish. When the polyimide film is used as a temporary fixing material, the thickness can be easily controlled by adjusting the solid content concentration and viscosity of the temporary fixing material composition.

The method for producing the polyimide film of the present invention is not particularly limited, and a known method can be used. For example, mention may be made of a method in which the varnish of the present invention is applied onto a support and then heated. Specifically, example thereof include a method in which the varnish is applied on a smooth support such as a glass plate, a metal plate, or a plastic, and then an organic solvent such as a reaction solvent or a dilution solvent contained in the said varnish is removed by heating. The polyimide varnish containing the polyimide resin of the present invention is suitably used as a raw material for a temporary fixing material. When the polyimide film of the present invention is used as a temporary fixing material, a semiconductor electronic circuit formed substrate is used as the support.

Examples of the coating method include known coating methods such as spin coating, slit coating, and blade coating. Among them, spin coating is preferable from points of view of improvement of film uniformity and workability.

As a method of removing the organic solvent contained in the varnish by heating, it is preferable that the organic solvent is evaporated at a temperature of 150°C or lower to make the varnish tack-free, and then the organic solvent is dried at a temperature equal to or higher than the boiling point of the organic solvent used (preferably at a temperature ranging from 200 to 500°C, but not particularly limited thereto). In addition, drying is preferably carried out under an air atmosphere or under a nitrogen atmosphere. The pressure of the drying atmosphere may be any of reduced pressure, normal pressure, and enhanced pressure.

The method in which the polyimide film formed on the support is separated from the support is not particularly limited, and examples thereof include a laser lift-off process, a method using a sacrificial layer for separating (a method in which a release agent is applied to the surface of the support in advance), and a method of adding a release agent. Note that, when the polyimide film of the present invention is used as a temporary fixing material, the semiconductor electronic circuit formed substrate and the supporting substrate are separated from each other, and the temporary fixing material is removed finally, and hence there is used a method in which the polyimide film as a temporary fixing material is dissolved with a solvent, or a method in which the polyimide film is irradiated with laser from the supporting substrate side thereby separating the polyimide film.

### Examples

Hereinafter, the present invention will be specifically described with reference to Examples. However, the present invention is not limited by these Examples at all.

### [Physical properties and evaluation of polyimide resin]

Measurement and evaluation of each physical property of the polyimide films obtained in Examples and Comparative Examples were performed by the following methods and the polyimide resins were evaluated.

### (1) Thickness of polyimide film

The thickness of the polyimide film was measured using a digital gauge "SA-S110/03N" available from Citizen Finedevice Co., Ltd.

### (2) Total light transmittance and Yellowness Index (YI)

For the measurement of the total light transmittance and YI of the polyimide film, a polyimide film separated off from a glass plate was used, the total light transmittance was measured in accordance with JIS K7361-1:1997, and YI was measured in accordance with ASTM E313 05 (Illuminant D65°), each of which was measured with a color and turbidity simultaneous measuring instrument "COH 7700" available from Nippon Denshoku Industries Co., Ltd.

The larger the value of the total light transmittance of the polyimide film, the more excellent the transparency of the polyimide resin. The larger the value of YI of the polyimide film, the more excellent the colorlessness of the polyimide resin.

### (3) Light transmittance at wavelength of 355 nm

The light transmittance of the polyimide film at a wavelength of 355 nm was determined by the following method by using a polyimide film separated from a glass plate.

The measurement was performed using an ultraviolet-visible-near infrared spectrophotometer "UV-3600Plus + MPC-603A" available from Shimadzu Corporation. The smaller the light transmittance value at a wavelength of 355 nm, the more excellent the LLO (laser lift-off) separability.

Note that, "< 0.1" in Table 1 indicates "less than 0.1%".

### (4) Glass transition temperature (Tg)

Using a thermomechanical analyzer "TMA 7100C" available from Hitachi High-Tech Science Corporation, the temperature was raised from 40°C to 300°C under the conditions of a sample size of 4 mm × 20 mm, a load of 50 mN, and a rate of temperature increase of 10°C/min in a tensile mode to perform TMA measurement, and a point where an inflection point of elongation was observed by extrapolation was defined as a glass transition temperature (Tg).

### (5) 5% weight loss temperature (Td5%)

A simultaneous thermogravimetric and differential thermal analyzer "NEXTA STA200 RV" available from Hitachi High-Tech Science Corporation was used. A sample (a polyimide film) was heated from 40°C to 50°C at a rate of temperature increase of 10°C/min, held at 150°C for 30 minutes thereby removing moisture, and then the temperature was raised to 500°C. A temperature at which the weight decreased by 5% as compared with the weight after holding at 150°C for 30 minutes was defined as the 5% weight loss temperature. The larger the numerical value (temperature) of the weight loss temperature, the more excellent the heat resistance. Note that, in Table 1, samples whose Td5% was higher than 500°C (samples whose weight loss was less than 5% even at 500°C) were indicated by "> 500".

### (6) Weight loss rate (%)

A simultaneous thermogravimetric and differential thermal analyzer "NEXTA STA200 RV" available from Hitachi High-Tech Science Corporation was used. A sample (a polyimide film) was heated from 40°C to 150°C at a rate of temperature increase of 10°C/min, held at 150°C for 30 minutes thereby removing moisture, and then the temperature was raised to 350°C. Based on the weight at reaching 350°C, the percentage of weight loss after holding at 350°C for 60 minutes was defined as the weight loss rate. The smaller the weight loss rate, the more excellent the heat resistance.

### (7) Tensile elastic modulus and tensile strength

The tensile elastic modulus and tensile strength of the polyimide film were measured in accordance with JIS K7127:1999 using a tensile tester "Strograph VG-1E" available from Toyo Seiki Seisaku-sho, Ltd. The lower the elastic modulus, the better the polyimide film, because the bonding becomes improved when the polyimide film is used as a temporary fixing material.

### (8) Solubility in solvents (after post-baking)

The polyimide film was immersed in GBL (γ-butyrolactone) and cyclohexanone at room temperature (25°C) and stirred with a magnetic stirrer and solubility was evaluated. Note that, the concentration during evaluation was 0.2% (w/w). The evaluation results were as follows.

Solubility in a solvent with low water absorption such as GBL (γ-butyrolactone) or cyclohexanone is preferable because a solvent with low water absorption can be used in the separation step, and the film is less susceptible to humidity or moisture during separation.
A: Dissolved within 1 hour.
B: Not dissolved within 1 hour but dissolved within 24 hours.
C: Not dissolved within 24 hours but dissolved within 72 hours.
D: Not dissolved within 72 hours (insoluble).

### (9) Solubility in solvents (after annealing at 350°C for 1 hour)

A polyimide film was formed on a silicon wafer by the method described in Examples, and then heated at 350°C for 60 minutes in a hot air dryer under a nitrogen atmosphere, and then solubility was evaluated. A sample was immersed in GBL (γ-butyrolactone) and cyclohexanone at room temperature (25°C) and stirred with a magnetic stirrer and the solubility was evaluated. Note that, the sample size during evaluation was 10 mm × 20 mm, and the amount of each solvent was 50 mL. The evaluation results were as follows.

Solubility in a solvent with low water absorption such as GBL (γ-butyrolactone) or cyclohexanone is preferable because a solvent with low water absorption can be used in the separation step, and the film is less susceptible to humidity or moisture during separation.
A: Dissolved within 1 hour.
B: Not dissolved within 1 hour but dissolved within 24 hours.
C: Not dissolved within 24 hours but dissolved within 72 hours.
D: Not dissolved within 72 hours (insoluble).

### <Abbreviations of components etc.>

The tetracarboxylic acid components and diamine components used in Examples and Comparative Examples, and abbreviations thereof are as follows.

### (Tetracarboxylic acid component)

6F-BPADA: 2,2-bis[4-(3,4-dicarboxyphenoxy)phenyl]hexafluoropropane dianhydride (a compound represented by Formula (a11), available from Air Water Performance Chemical Inc.)
BPF-PA: 9,9-bis[4-(3,4-dicarboxyphenoxy)phenyl]fluorene dianhydride (a compound represented by Formula (a12), available from JFE Chemical Corporation)
X-22-168AS: Dual-end type carboxylic acid anhydride-modified silicone (Viscosity at 25°C: 160 mm²/s, functional group equivalent: 518 g/mol, available from Shin-Etsu Chemical Co., Ltd., a compound represented by Formula (a21))
BPADA: 2,2-bis[4-(3,4-dicarboxyphenoxy)phenyl]propane dianhydride (a compound represented by the following formula, available from Tokyo Chemical Industry Co., Ltd.) 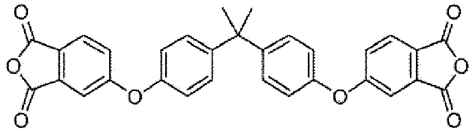
HPMDA: 1,2,4,5-cyclohexanetetracarboxylic dianhydride (a compound represented by the following formula, available from Mitsubishi Gas Chemical Company, Inc.)

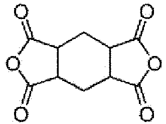

### (Diamine component)

TPE-M: 1,3-bis(3-aminophenoxy)benzene (a compound represented by Formula (b11), available from Seika Corporation)
DA5MG: 4,4'-(pentamethylenebisoxy)aniline (a compound represented by Formula (b22), available from Seika Corporation)

Abbreviations of solvents and catalysts used in Examples and Comparative Examples are as follows.
GBL: γ-butyrolactone (available from Mitsubishi Chemical Corporation)
TEA: Triethylamine (available from Kanto Chemical Co., Inc.)

### <Production of polyimide resin, polyimide varnish and polyimide film>

### Example 1

Into a 500 mL 5-necked round bottom flask equipped with a stainless steel semicircular stirring blade, a nitrogen inlet tube, a Dean-Stark apparatus equipped with a condenser, a thermometer, and a glass end cap were put 29.234 g (0.100 mol) of TPE-M and 136.802 g of GBL, and the mixture was stirred at a rotational speed of 200 rpm in a nitrogen atmosphere with a system temperature of 70°C, and a solution was obtained.

To this solution, 62.844 g (0.100 mol) of 6F-BPADA and 25.650 g of GBL were added at once, and then 0.506 g of TEA and 8.550 g of GBL as imidization catalysts were added, heated with a mantle heater, and the temperature in the reaction system was raised to 190°C over about 20 minutes. While the components removed by distillation were collected, the temperature in the reaction system was maintained at 190°C and refluxed for 3 hours. Thereafter, 182.894 g of GBL was added so that the solid content concentration became 20 mass%, and the reaction system temperature was lowered to 50°C to give a polyimide varnish containing a polyimide resin.

Subsequently, the resultant polyimide varnish was applied onto a silicon wafer by spin coating, held on a hot plate at 120°C for 20 minutes, and then heated in a hot air dryer at 220°C for 30 minutes in an air atmosphere thereby evaporating the solvent to give a polyimide film. The physical properties and evaluation results of the film are shown in Table 1.

### Examples 2, 3, and 5 and Comparative Example 2

A solution containing a polyimide resin was obtained in the same manner as in Example 1 except that 6F-BPADA in Example 1 was changed to tetracarboxylic acid components shown in Table 1.

GBL was added to the resultant solution so that the solid content concentration became 20 mass%, and the mixture was homogenized to give a polyimide varnish containing a polyimide resin.

Subsequently, the resultant polyimide varnish was applied onto a silicon wafer by spin coating, held on a hot plate at 120°C for 20 minutes, and then heated in a hot air dryer at 220°C for 30 minutes in an air atmosphere thereby evaporating the solvent to give a polyimide film. The physical properties and evaluation results of the film are shown in Table 1.

### Example 4

A solution containing a polyimide resin was obtained in the same manner as in Example 1 except that TPE-M in Example 1 was changed to the diamine components shown in Table 1.

GBL was added to the resultant solution so that the solid content concentration became 20 mass%, and the mixture was homogenized to give a polyimide varnish containing a polyimide resin.

Subsequently, the resultant polyimide varnish was applied onto a silicon wafer by spin coating, held on a hot plate at 120°C for 20 minutes, and then heated in a hot air dryer at 220°C for 30 minutes in an air atmosphere thereby evaporating the solvent to give a polyimide film. The physical properties and evaluation results of the film are shown in Table 1.

### Comparative Example 1

A solution containing a polyimide resin was obtained in the same manner as in Example 1 except that 6F-BPADA in Example 1 was changed to tetracarboxylic acid components shown in Table 1.

GBL was added to the resultant solution so that the solid content concentration became 20 mass%, but the miscibility with GBL was poor, and the mixture was not able to be homogenized. Therefore, NMP was added to the resultant solution so that the solid content concentration became 20 mass%, thereby homogenizing the mixture to give a polyimide varnish containing a polyimide resin.

### [Table 1]

**Table 1**

| | | | | Exampl e 1 | Exampl e 2 | Exampl e 3 | Exampl e 4 | Exampl e 5 | Comparativ e Example 1 | Comparativ e Example 2 |
|---|---|---|---|---|---|---|---|---|---|---|
| Polyimide resin | Tetracarboxylic acid component (Numerals indicate mole ratios) | 6F-BPADA | (a11) | 100 | 90 | - | 100 | - | - | - |
| | | BPF-PA | (a12) | - | - | 90 | - | 100 | - | - |
| | | X-22-168AS | (a21) | - | 10 | 10 | - | - | - | - |
| | | BPADA | - | - | - | - | - | - | 100 | - |
| | | HPMDA | - | - | - | - | - | - | - | 100 |
| | Diamine component (Numerals indicate mole ratios) | TPE-M | (b11) | 100 | 100 | 100 | 50 | 100 | 100 | 100 |
| | | DA5MG | (b22) | - | - | - | 50 | - | - | - |
| | - | Film thickness | µm | 30.0 | 30.0 | 30.4 | 31.0 | 24.5 | 30.0 | 28.7 |
| | Optical properties | Total light transmittance | % | 88.4 | 88.1 | 86.2 | 88.6 | 87.1 | 87.1 | 88.1 |
| | | Transmittance (at 355 nm) | % | 0.2 | 0.2 | 0.1 | 0.1 | 0.1 | 0.1 | 75.1 |
| | | YI | - | 2.9 | 4.4 | 6.4 | 8.2 | 3.1 | 3.8 | 3.3 |
| | Thermal properties | Tg | °C | 171 | 145 | 183 | 167 | 205 | 163 | 198 |
| Film properties | | Td5% | °C | >500 | 490 | 486 | 482 | >500 | >500 | 466 |
| | | Weight loss (350°C, 1 h) | wt% | 0.2 | 0.6 | 0.6 | 0.1 | 0.1 | 0.1 | 3.3 |
| | Mechanical properties | Tensile strength | MPa | 99 | 80 | 90 | 85 | 105 | 101 | 92 |
| | | Tensile elastic modulus | GPa | 2.8 | 2.2 | 2.5 | 2.4 | 3.1 | 2.8 | 3.6 |
| | Solubility in solvents (After post-baking) | GBL | - | A | A | A | A | A | D | A |
| | | Cyclohexanone | - | A | A | B | A | B | D | A |
| | Solubility in solvents (After annealing) | GBL | - | A | A | A | A | A | D | A |
| | | Cyclohexanone | - | A | A | B | A | B | D | A |

As shown in Table 1, the polyimide resins (polyimide films) of Examples each have a small light transmittance at a wavelength of 355 nm and a low glass transition temperature, but exhibit a high weight loss temperature, have a low elastic modulus and are excellent in solubility in solvents such as GBL and cyclohexanone.

From this, the polyimide resin of the present invention has a small elastic modulus and a low glass transition temperature and hence is excellent in low-temperature adhesiveness. The polyimide resin of the present invention also exhibits a high weight loss temperature, and hence has heat resistance in the process of manufacturing semiconductor electronic components as well. Furthermore, it is found that the polyimide resin of the present invention has a small light transmittance at a wavelength of 355 nm, and hence can be separated with laser, and that the polyimide resin of the present invention is excellent in solubility in solvents such as GBL and cyclohexanone and hence can be separated with various solvents.

As described above, the polyimide resin of the present invention can be suitably used as a temporary fixing material, and a temporary fixing material composition containing the said polyimide resin has the excellent properties mentioned above.

## Claims

1. A polyimide resin comprising a constitutional unit A derived from a tetracarboxylic dianhydride and a constitutional unit B derived from a diamine,
the constitutional unit A including a constitutional unit (A1) derived from a compound represented by Formula (a1) set forth below, and
the constitutional unit B including a constitutional unit (B1) derived from a compound represented by Formula (b1) set forth below: 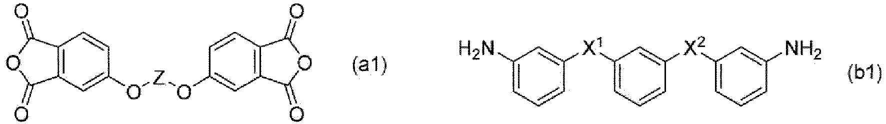
where in the formulas, Z is a group represented by Formula (1) set forth below or a group represented by Formula (2) set forth below, and X¹ and X² each independently represent -O-, -C (CH₃)₂-, or -C(CF₃)₂-, 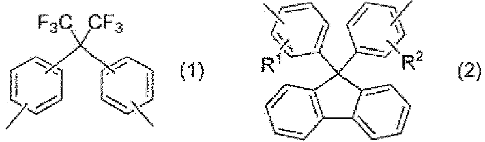
where in Formula (2), R¹ and R² are each independently a hydrogen atom, a fluorine atom, or an alkyl group having from 1 to 5 carbon atoms.

2. The polyimide resin according to claim 1, wherein a proportion of the constitutional unit (A1) in the constitutional unit A is from 30 to 100 mol%.

3. The polyimide resin according to claim 1 or 2, wherein a proportion of the constitutional unit (B1) in the constitutional unit B is from 30 to 100 mol%.

4. The polyimide resin according to any one of claims 1 to 3, wherein the constitutional unit (A1) includes at least one selected from the group consisting of a constitutional unit (A11) derived from a compound represented by Formula (a11) set forth below and a constitutional unit (A12) derived from a compound represented by Formula (a12) set forth below:

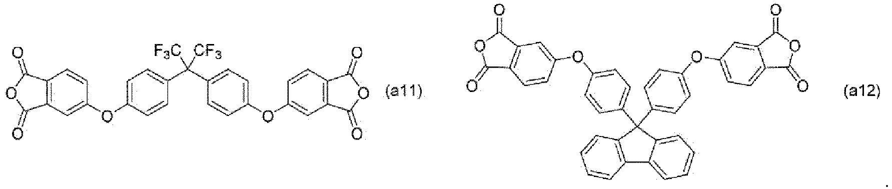

5. The polyimide resin according to any one of claims 1 to 4, wherein the constitutional unit (B1) includes a constitutional unit (B11) derived from a compound represented by Formula (b11) set forth below:

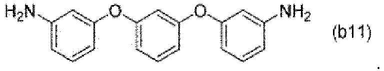

6. The polyimide resin according to any one of claims 1 to 5, wherein the constitutional unit B further comprises a constitutional unit (B2) derived from a compound represented by Formula (b2) set forth below: 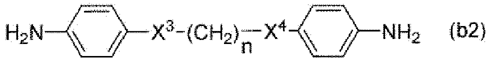 where in the formula, X³ and X⁴ each independently represent -O-, -COO-, or -OCO-, and n is an integer of from 2 to 10.

7. The polyimide resin according to any one of claims 1 to 6, comprising a constitutional unit represented by a general Formula (3) set forth below: 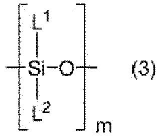 where in the formula, L¹ and L² are each independently a monovalent aliphatic hydrocarbon having from 1 to 5 carbon atoms or a monovalent aromatic group having from 6 to 10 carbon atoms, and m is an integer of from 1 to 200.

8. A polyimide varnish comprising the polyimide resin according to any one of claims 1 to 7 and an organic solvent.

9. A polyimide film comprising the polyimide resin according to any one of claims 1 to 7.

10. A temporary fixing material composition comprising the polyimide resin according to any one of claims 1 to 7.
